# EUROPEAN PATENT APPLICATION

(11) **EP 0 618 022 A1**
(43) Date of publication of application: **05.10.1994**
(21) Application number: 94830116.3
(22) Date of filing: 17.03.1994
(51) Int. Cl.: B21J 15/32

(54) **Automatic system for selecting and feeding preoriented rivets to riveting machines**

(30) Priority: 22.03.1993 IT MI930540
(71) Applicant: BEARS S.r.l., I-20129 Milano (IT)
(72) Inventor: Bonomi, Giovanni Battista, I-29012 Caorso (Piacenza) (IT)
(74) Representative: Carloni, Franco

(57) **Abstract**

The system foresees to equip each riveting machine (3) with a buffer magazine (2) comprising a tube bundle (26) inside which each single tube element (29) is containing a certain amount of preoriented rivets or like fasteners one by one quickly deliverable to the riveting machine and to place on the floor, in a stationary position, a feed station (1) in charge to keep refurbished all the buffer magazines (2) connected to it. Each buffer magazine (2) contains the entire inventory of rivet used by the machine and it accomplish the task to quickly satisfay any request from the riveting machine; the floor mounted feed station (1) accomplish the task to maintaining refilled any buffer magazines. The feed station (1) is activated when the rivet level of a tube element (29) inside a buffer (2) reaches the minimum level.

## Description

The present invention relates to an automatic assembly systems and particularly to a system for the selection and the delivery of preoriented rivets or like fasteners to one or more riveting machines.

The procedure of assembling parts by means of riveting is largely used in the industry; in particular in the aerospace industry. During the evolution of this technology, a large number of automatic riveting machines have been developed, which according to the parts to be assembled, are able to install different kinds of rivets or like festeners and for each kind of them, to finalize the choice of different lengths depending upon the thickness of the sheets to be jointed.

Rivets or like fasteners are usually supplied from a suitable rivet feeding system capable to select and send, time by time, to the riveting machine the right kind and length of requested rivet.

With the development of continuous numeric control (CNC) the later automatic riveting machines are capable to assemble a larger number of different parts and, for each of them, to storage the program which assigns the position of each rivet to be installed. The machines are as well able to accurately finalize the correct call of the right kind and length of the rivet to be installed.

Typically the rivet kind is assigned by the designer and memorized inside the program while the length is chosen upon measuring, time by time, the thickness of the parts to be connected together.

Rivets are consequently requested with an unpredictable sequence and they must be delivered in a very short time in order to avoid the cycle time to be slowed down.

Several automatic rivet feed systems are known, in which all rivets of the same kind and same length (identical) are storaged inside a preassigned vibratory bowl which provides orientation and accumulation of the rivets inside a track, usually horizontal, whereby rivets are withdrawn one at a time and pneumatically transferred via tube to the riveting machine.

In addition to such systems, other automating riveting magazine means are known such as spirals or cassettes or other whereas the different rivets are inserted and preoriented inside a "cartridge-type" magazine. Such magazines feature a certain capacity and usually are mounted close to the riveting machine.

Both these approaches to the problem of automatically feeding a riveting machine by delivering to it, one by one, a preoriented rivet belonging to a certain inventory of available rivets, suffer several heavy constraints and/or limitations.

In the solution with vibrating bowl, each bowl is dedicated to a precise kind and length of the rivet and such solution is consequently very expensive and bulky. In fact, it is sufficient to think to a system able to handle five different kinds of rivets and for each of them at least ten different grip lengths to have an idea of costs and size involved. Furthermore, a feed station featuring fifty or more bowls cannot be mounted a board of the machine for problems of weight an size and consequently it needs to lie on the floor and to be connected via tube to the riveting machine with a related performance drop in terms of delivery time.

The other solutions with "cartridge magazine" are on one hand more compact, but on the other hand they need continuous supervision to replace empty magazines and they involve as well cost aggravation related to the magazine preparation .

The main object of the present invention is to provide an inexpensive and reliable system for selecting and automatic feeding pre-oriented rivets to the automatic riveting machine.

Another object of the present invention is to provide a system capable to perform a particularly short average rivet delivery time to the riveting machine, the term "average time" meaning the time from when the machine forwards the rivet call to the instant when the machine receives the desired rivet.

A further object of the present invention is to provide a system capable to feed several riveting machines simultaneously.

Still a further object of the present invention is to provide a system extremely compact and efficient even in applications where it is necessary to automatically handle a very large number of different rivets (f.e. one hundred or more).

More in particular the system for the automatic selection, orientation and feeding of rivets or like fasteners to one or more riveting machines fed from a main feed station operating in a remote and stationary position, comprises:
- a mobile buffer magazine for each riveting machine, intended to receive, one by one, the desired rivet requested from the machine and comprising a plurality of individual magazine means each one intended to contain a plurality of preoriented rivets of the same kind and the same grip length;
- a plurality of rivet orienting means each able to supply in a preoriented and organized manner rivets from an unorganized stack of rivets and supplying them one by one;
- first transporting means for transferring rivets or like fasteners from the main service station to said mobile buffer magazine;
- second transporting means for transferring rivets from the mobile buffer magazines to the related automatic riveting machine;
- first positioning means for positioning the outlet end of each of said first transporting means in coaxial alignment with the inlet end of each individual magazine means belonging to said mobile buffer magazine;
- second positioning means for positioning the inlet end of each of said second transporting means in coaxial alignment with the outlet end of each one of the individual magazine means of said mobile buffer magazine;

said plurality of rivet orienting means, and positioning means being under control of a same control means.

The present invention will now be described in greater detail in connection with a preferred embodiment given by way of an example and in conjunction with the accompanying drawings, in which:
Fig. 1 is a schematic illustration showing how the system according to the present invention operates;
Fig. 2 shows a typical family of utilized rivets;
Fig. 3 is a schematic section of the mobile buffer magazine;
Fig. 4 is a prospectic view of the device for the selection and interconnection of the tubes according to a preferred embodiment;
Fig.5 is a schematic top view of the mobile buffer magazine;
Fig 6 is a cross section of a typical transporting means for rivets or like fasteners;
Fig. 7 schematically shows the typical arrangement of the main feed station according to the most complete embodiment; and
Fig. 8 shows schematically a typical application of the system.

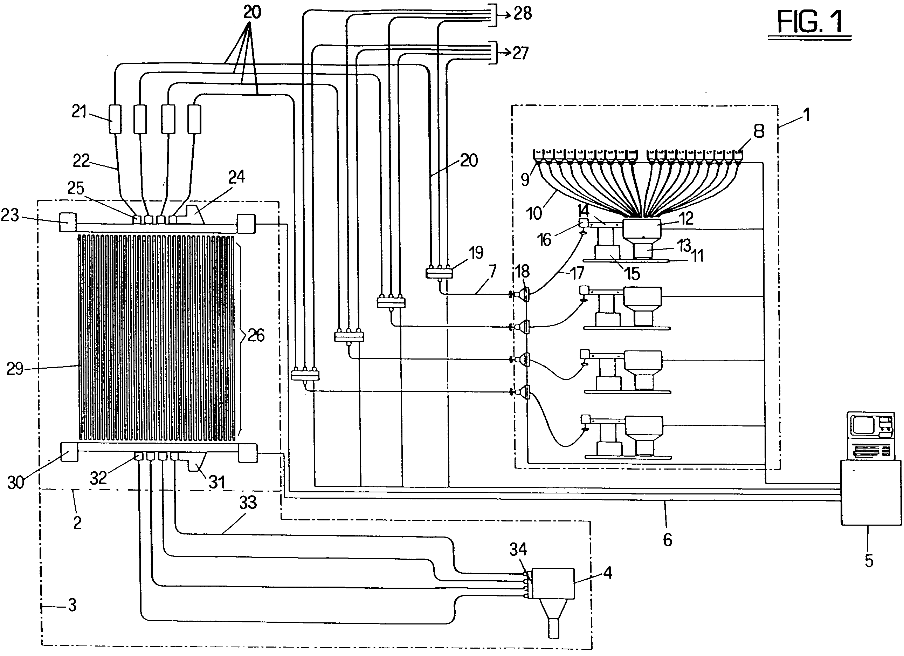

In Fig. 1 there are schematically illustrated the main feed station 1, the mobile buffer magazine 2, the automatic riveting machine 3, the related riveting head 4, the rivet transporting means 7,20 and 22 connecting the main service station 1 to the buffer magazine 2, the control means 5 and the cables 6 connecting the latter to the controlled utilities. The same Figure shows, inside the main feed station 1 is shown a plurality of hoppers 8 all containing rivets of the same kind but with each separate hopper containing rivets of different grip length, the shuttle valve 9 for the opening and closing of the hoopers 8, the rivet orienting means 11 and the transfer tube 17. Each orienting device 11 comprises a bowl 12 and a related vibrating device 13, a track 14 and the related vibrating device 15 and an escapement 16 while numeral 10 indicates the tubes connecting each hopper 8 to the same bowl 12. In the same Figure, the rivet transfer tube connecting the escapement 16 to the distributor 25 comprises the tube sections 17,20 and 22, in which a booster device 18, a selecting device 19 and decelerating device 21 are interposed. In the same Figure there is shown how the selectors 19 allow the unique service station 1 to be connected to a plurality of mobile buffer magazines, in the Figure the references 27 and 28 indicating the direction of tubes 20 towards two additional buffer magazines (not shown in the Figure).

Still in Figure 1, there are shown the main element of the buffer magazine 2 and particularly the upper selecting device 23 equipped with the mobile transverse 24 and distributor 25, the tube bundle 26 comprising a plurality of single tubing elements 29 placed in an organized arrangement, the lower selecting device 30 equipped with the mobile transverse 31. and a distributor 32. Furthermore Figure 1 shows the rivet receiving unit 34 embodied inside the riveting head 4 and the tubes 33 dedicated to transfer the rivets or like fasteners from the mobile buffer magazine 2 to the riveting head 4.

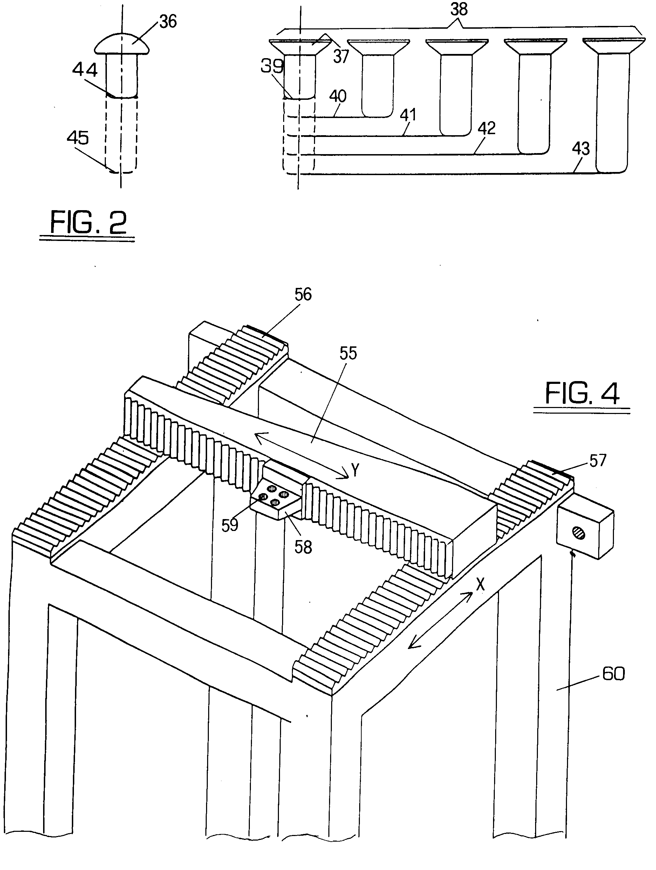

In Figure 2 two different kinds of rivets 36 and 37 are represented. Numeral 38 indicates the typical family of rivets of the same kind (37) but with different grip lengths; in particular the shortest rivet 39, the longest rivet 43 and all other rivets 40, 41, and 42 having intermediate lengths. References 44 and 45 indicate the minimun and maximun length of rivet kind 36, respectively while for sake of simplicity the intermediate lengths are not shown.

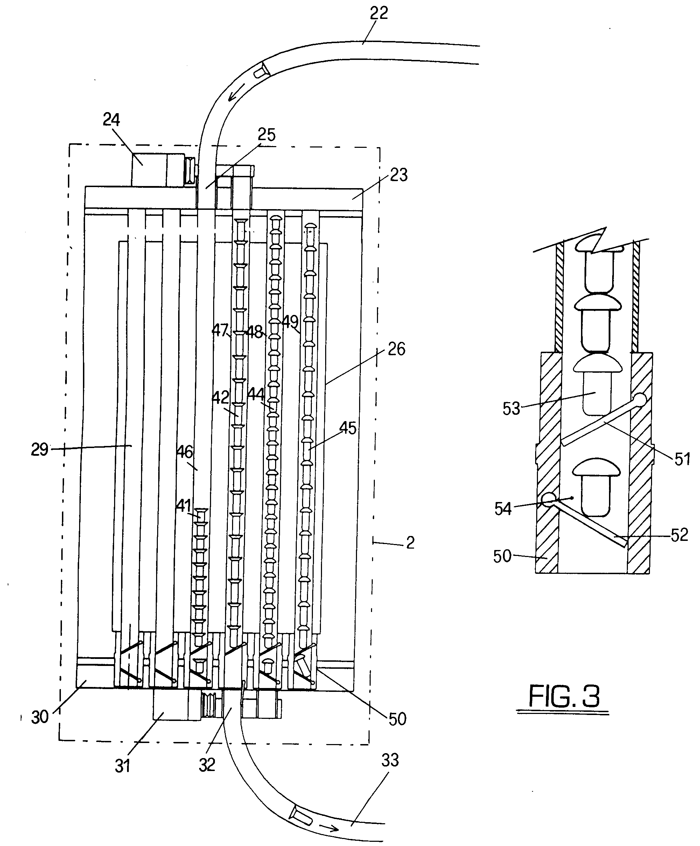

In Figure 3 the components of mobile buffer magazine 2 are schematically represented. Among them it can be seen a tube 22 coming from the feed station 1 of Figure 2, the upper selecting device 23, the tube bundle 26, the lower selecting device 30 and the tube 33 outgoing towards the riveting head 4 of Figure 1. Inside the tube bundle a plurality of vertical tubes 29 are shown and four of them 46,42 and 49 are represented in cross section and show the rivets 41,42,44 and 45 stored inside. It is important to observe that 41 and 42 are rivets of the same kind but of different grip length and consequently tubes 46 and 47 are identical but each is assigned to storage different rivets; accordingly, 44 and 45 are again rivets of the same kind but with different grip length although they are kinds of rivet different from rivets 41 and 42. Consequently tubes 48 and 49 are identical, containing different grip lengths of the same kind of rivet but most likely different from tubes 46 and 47 (different internal diameter).
The same Figure 3 a rivet selector (escapement) 50 shows located at the lower bottom end of each tube 29 belonging to tube bundle 26; inside the escapement two different opening-closing devices 51 and 52 which are adapted to release one rivet at a time once synchronously powered from an outer actuator (not shown in the Figure). Said actuators are mounted inside the distributor 32 equipping the lower selecting device 30, but, as further explained in greater detail, one single pair of actuators is able to drive the escapement 50 of each tube 29.

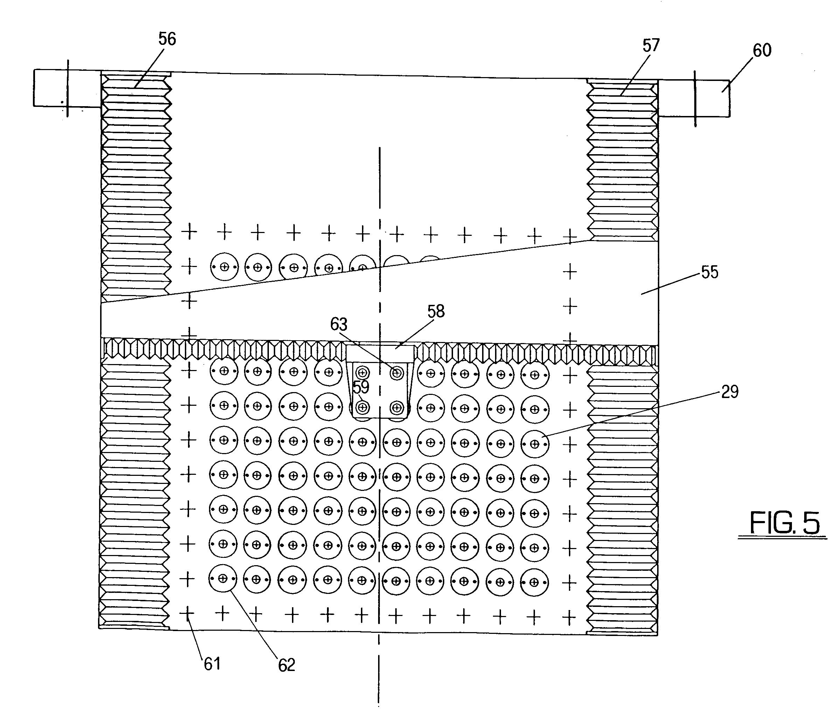

Figure 4 is a prospective view of the preferred embodiment of the upper selecting device 23 and shows the tube carrier 58, the housing 59 for tubes 22 of Figure 1, the traverse 55 on which the tube carrier 58 horizontally slides along the direction Y, the rails 56 and 57 on which the traverse 55 transversely slides along the direction X and the frame 60.

For sake of simplicity the related lower selecting device 30 is not shown since it is identical to the upper one but simply mounted upside down at the bottom end of the same frame 60.

Figure 5 is a top view of the buffer magazine which, in addition to afore mentioned elements in Figure 4, shows a tube bundle comprising one hundred tubes 29 arranged according to a 10x10 array. It must be noted that the receiving head 58 is prearranged for four different tubes 22 and each of them can be positioned in coaxial alignment with any one of the one hundred underlaying tubes 29 so that when for example it is necessary to align tube 22 located in the position 63 of the head 58 with tube 29 located in the position 62 inside the buffer magazine, then the tube 22 which is located in the position 59 of the head 58 necessarily will occupy the position 61.

In order to establish whichever possible combination among tubes 22 and tubes 29 it is consequently necessary to foresee one empty space perimetrally around the tube bundle and to enlarge consequently both the frame 60 and the traverse 55 of the selecting devices 23 and 30 of Figure 1.

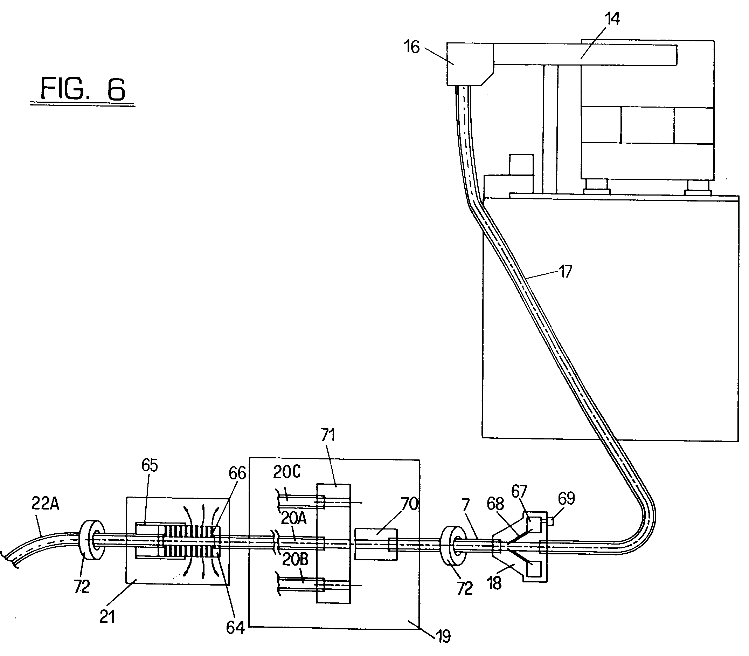

Figure 6 shows the typical rivet transporting line comprising an orienting device 14, the related escapement device 16, the first tube section 17, the booster device 18, a second tube section 7, a selecting device 19, three outgoing tubes 20A,20B and 20C, the deceleration device 64 and the last tube section 22a which reaches the upper selecting device 23 inside the mobile buffer magazine 2.

Further in Figure 6 there are shown some details inside the devices 18,19 and 21 and particularly inside the device 18 the inlet air conduit 69, the annular distribution chamber 67 and the inclined holes 68 for air injection inside the tube. Arranged inside the device 19 is the tube housing 70 receiving a single tube 7 whereas the shuttling drawer 70 is arranged inside the distributor body with one or more tubes 20 connected thereon, for example 20A,20B and 20C, each of them directed towards a different mobile buffer magazine. Inside the device 21 the cylindrical body 64 is shown, the inlet of which is connected to one end of tube 20A while the outlet is connected to one end of tube 22A, a plurality of small holes 66 radially located and an outer cylindrical sleeve acting as an exhaust flow regulator (to partially close holes 66). The same Figure shows as well the magnetic sensors 72 intended to provide feed back for correct rivet transit inside the tube.

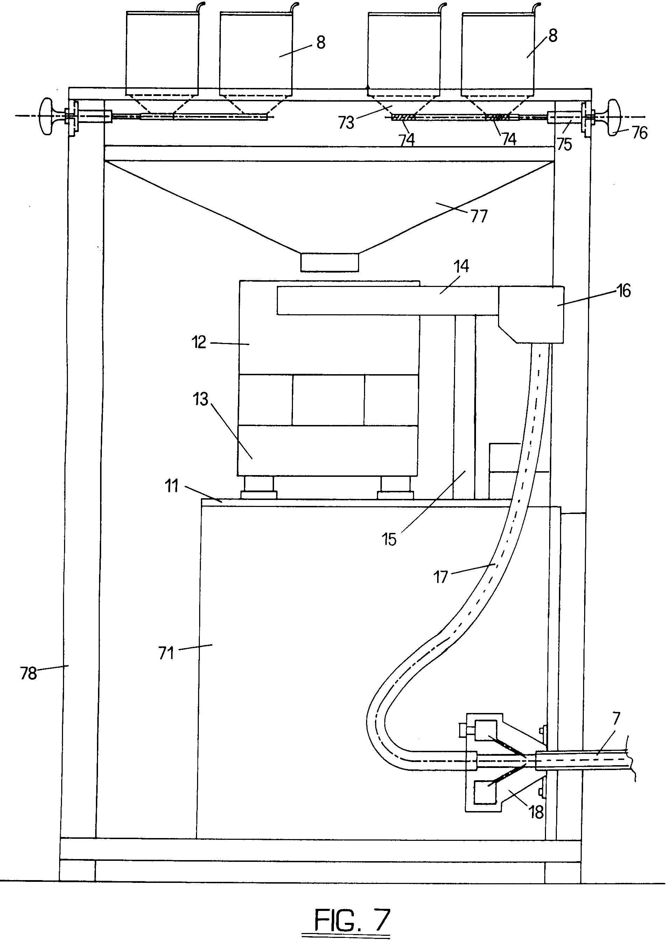

Figure 7 schematically shows the arrangement of the main components of a typical modular unit inside the main rivet feed station. In particular each unit comprises the hoppers 8 with their funnel shaped end 73, the shuttle valve 74, the related pneumatic actuator 73 comprising the knob 76 (to override the pneumatic actuator) the quadrangular shaped funnel 77 and the orienting means 11 previously shown in Figure 1.

The same Figure shows as well the supporting element 71 of the orienting means 11 and the supporting means 78 for the hoppers 8. It is important to observe that each different rivet requires its own dedicated hoppers 8 while all rivets of the same kind, regardless of their length, are oriented and sent one by one from a single orienting means 11. The arrangement within the main service station consequently foresee to gather together all hoppers 8 containing rivets of different grip length but of the same kind. The group of hoppers containing rivets of the same kind is located above a single orienting means 11 suitable to orient that particular kind of rivet.

Of course, the main feed station 1 will comprise as many modular units as are the differents kinds of rivet handled and units number is not related to different grip lengths since this is only effect the number of hoppers integrated and not the number of modular units integrated.

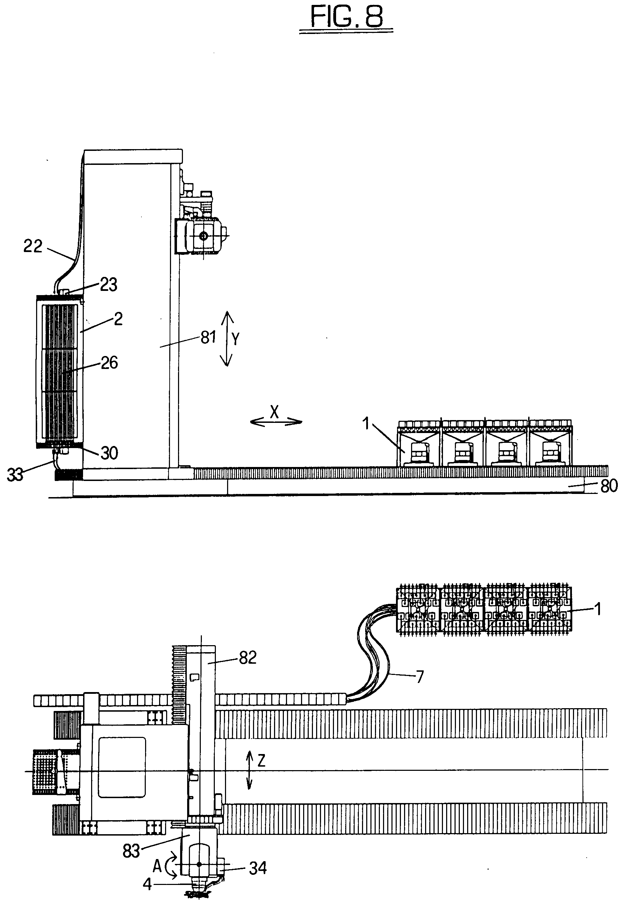

Figure 8 shows a front view and a top view of a typical application of the present invention whereas the system is mounted a board of an automatic riveting machine comprising in this particular case a robot adapted to position and orient the riveting head. This Figure shows the main feed station 1 located on the floor in a stationary position, the mobile buffer magazine 2, the rivets transporting means 7, 22 and 33 and the positioning means 23 and 30.

The same Figure shows as well the main robot components such as the main bed section 80, the mobile column 81, the translating ram 82, the operating head 83 and the main robot moving direction X, Y, Z and A.

During normal operation in the automatic mode, the riveting machine is able to exactly finalize, one at a time, kind and length of the rivet to be installed. The task to quickly deliver to the riveting machine one specifically requested rivet at a time is carried out by the mobile buffer magazine 2 inside which the entire inventory of preoriented rivet or like fasteners is contained. Inside the buffer magazine, usually located a board of the riveting machine, at a small distance from the riveting head, in an organized manner placed a plurality of vertical tubes 29 inside which a limited amount of preoriented identical rivets are stacked one on top of the other. For each different kind of rivets a certain number of vertical tubes is foreseen which have an inner diameter slightly higher than the maximum diameter of the head of that particular kind of rivet; at least one of these vertical tubes is dedicated to each different grip length of rivets of the same kind so that, inside the buffer magazine, there is at least a number of tubes equal to the number of different rivets inside the inventory of rivets necessary to the riveting machine to perform the assembly cycles.

Being said tubes capacity necessarily limited, more than one tube can be dedicated to accumulate rivets of the same kind and length, this being particularly convenient for frequently called rivets.

All vertical tubes inside the buffer magazine are kept normally full so that the buffer magazine is, in every instant, able to satisfy the rivet calls of the riveting machine.

In case it is necessary to deliver frozen rivets to the riveting machine, some or all of the vertical tubes can be thermically insulated and kept chilled, for example by liquid nytrogen injection.

The task of refilling the buffer magazines is carried out by the main feed station 1 which keeps the rivet level above the minimum storage level inside all buffer magazines. Whenever in fact, rivets inside one of the tubes 29 reach the minimum storage level, the main service station 1 starts to refill that tube sending in sequence a certain number of preoriented rivets identical to the one contained inside it.

This can happen with two different procedures according to the alternative arrangement of the main feed station 1.

The first option foresees a rivet feed station containing an orienting means 11, for example a vibrating bowl for each different kind and or length of rivet and from which it is directly possible to withdraw, one by one, the preoriented rivets necessary to refill the empty tubes 29 from the minimum level to the maximum level. In this case each orienting means 11 is permanently dedicated to a specific kind and length of rivets.

A second option foresees a rivet feed station containing a certain amount of every different rivets or like fasteners belonging to the inventory, storaged in heaps inside suitable hoppers 8.

The hoppers containing rivets of the same kind but of different grip length, are gathered and placed above a single orienting means 11 suitable to orient rivets of the same kind regardless of their length.

A plurality of tubes 10 rather than a single funnel are placed between the hoppers 8 and the orienting means 11 so that, by gravity, it is possible to transfer the entire contents of one of the hoppers inside the same orienting means 11. The hoppers 8 contain a preweigthed and pre-counted amount of rivets and they are kept filled by an operator; the orienting means 11 is normally empty and off.

That is to say, that at least one hopper 8 (containing rivets in heaps) and one tube 29 (containing rivet selected and preoriented) are univocally preassigned to each different rivet and both are kept normally full.

### OPERATION

During the automatic operating cycle the riveting machine forwards its instantaneous rivet request in terms of desired kind and length.
With reference to Figures 1 and 3, for each different rivet selection, at least one tube 29 is univocally dedicated inside the mobile buffer magazine 2 and one particular tube 33 is as well associated. Consequently the selected device 30 moves its own axes X and Y in order to bring in coaxial alignment the selected tube 33 with the tube 29 which contains the desired rivets.

At this point a first actuator, located inside the head 58 of the device 30, activates the opening of the first device 52 causing the release of a single rivet, more precisely the one resident inside the expulsion chamber 54 of Figure 3 which, simply for gravity or pneumatically pushed, enters the underlying tube 33 without loosing the orientation and then reaches the riveting head 4. Once the delivery of the rivet is accomplished the device 52 is closed while a second opening device 51 is opened allowing the above rivet column to discend. Once rivet 53 reaches chamber 54, the device 51 is closed and the escapement 50 is consequently ready for next delivery.

As the automatic riveting machine continues the cycle dictating its rivet requests, the selecting device 30, controlled by the riveting machine continues to withdraw from tubes 29 the requested rivet and consequently the rivet level inside each one of them is decreasing.

When it occurs that one out of all tubes 29 reaches the minimum storage level, the main feed station starts the refilling process. It must be observed that said minimum level is directly detected by a sensor or it is alternatively indirectly provided by keeping track of the number of rivets withdrawn so that the control units can reliably supervise the rivet level inside each one of tubes 29 of magazine 26.

The refilling cycle starts with a positioning of the selecting device 23 during which the selected tube 22, suitable for transporting rivets contained inside the specific tube 29 to be refilled, is brought in coaxial alignment with the latter, so that the rivets sent from the main feed station can be inserted therethrough.

Once said positioning has been accomplished the control unit commands the opening of the shuttle valve 9 of hoppers 8 containing rivets identical to the ones contained inside the empty tube 29 to be refilled. The rivets fall inside tube 10 and then reach bowl 10 where the orienting cycle is started. All identical rivets are organized in line inside a track 14 and then in a sequence of one by one, are released in preoriented relationship inside tube 17. Each of them reaches booster device 18 which applies a pneumatic thrust, then the device 19 which directs them towards the selected buffer magazine then the device 21 which slows the rivets down allowing them to enter the underlying tube magazine 29 with limited speed. This continues until the entire amount of rivets originally contained in hopper 8 is sent to the tube 29; it must be noted that the refilling cycle is carried out while riveting it is operating and the number of rivets per minute transferred by the rivet feed station to the buffer is far higher then the rivet withdrawn from the buffer by the riveting machine.

The refilling cycle is accomplished and starts again once the rivet level inside another tube 29 becomes slower than the minimum level. If this occurs while the previous refilling cycle for another tube 29 is not finished yet, the request goes in waiting list and it is carried out once the previous one is accomplished.

The system is then ready for the refilling of the next tube 29 requiring assistance. Obviously the capacity of the tube 29 to be refilled is equal or greater than the capacity of the corresponding hopper 8.

From what it has been described, it is clear how the system of the selection and the automatic delivery of rivets according to the present invention represents a considerable progress against previous state of the art since it allows the following advantages to be attained:
- The system, specially in the application in which a large amount of different rivet kinds and lengths need to be handled, is less expensive.
- The system can simultaneously feed more than one riveting machine.
- The system features a very short rivet delivery time regardless of the number of different rivets or like fasteners to be handled.
- The system is more compact and more reliable compared to a previous technology handling the same amount of different rivets.

## Claims

**1)** System for selecting and automatic feeding preoriented rivets or like fasteners to one or more riveting machines fed from a main feed station operating in a remote stationary position, comprising:
- a mobile buffer magazine (2) for each riveting machine (3), dedicated to receive, one by one, the desired rivet requested from the machine and comprising a plurality of individual magazine means (29) each intended to contain a plurality of preoriented rivets of the same kind and the same grip length;
- a plurality of rivet orienting means (11) each able to supply, in a preoriented and organized manner, rivets from an unorganized stack of rivet and supplying them one by one;
- first transporting means (17,7,20 and 22) for transferring rivets or like fasteners from the main feed station (1) to said mobile buffer magazine (2);
- second transporting means (33) for transferring rivets from the mobile buffer magazines (2) to the related automatic riveting machine (3);
- first positioning means (23) for positioning the outlet end of each of said first transporting means (22) in coaxial alignment with the inlet end of each individual magazine means (29) belonging to said mobile buffer magazine (2);
- second positioning means (30) for positioning the inlet end of each of said second transporting means (33) in coaxial alignment with the outlet end of each one of the individual magazine means (29) of said mobile buffer magazine (2); said plurality of rivet orienting means (11), and positioning means (23,30) being under control of a same control means.

**2)** System for selecting and automatic feeding preoriented rivets or like fasteners to one or more riveting machines according to claim 1 wherein the individual magazine means (29) inside said mobile buffer magazine (2) are linear tubes arranged in an organized parallelepiped-shaped tube bundle (26).

**3)** System for selecting and automatic feeding preoriented rivets or like fasteners to one or more riveting machines according to claim 1 and 2 wherein each said individual magazine means (29) comprises a double opening-closing device (50) located at the bottom end and capable to withstand the weight of the above laying column of preoriented rivet (53) stacked one on top of the other and release one rivet at a time upon command given by the control unit (5).

**4)** System for selecting and automatic feeding preoriented rivets or like fasteners to one or more riveting machines according to claim 1 wherein said transporting means are flexible tubes (17,7,20 and 22) each one of them featuring an internal diameter that allows the kind of rivet to which the tube is dedicated to travel inside it pneumatically pushed without loosing the orientation originally impressed during its first insertion inside the tube itself regardless of the grip length and as long as its length is greater than the rivet head diameter.

**5)** System for selecting and automatic feeding preoriented rivets or like fasteners to one or more riveting machines according to claims 1 and 4 wherein said first transporting means (17,7) between said floor mounted main feed station (1) and said mobile magazine (2) comprises a booster device (18) interposed and dedicated to transfer energy to the rivet in order to maintain a desired target speed inside the tube, said energy being applied by injecting inside the tube compressed air behind the travelling rivet with suitable air pressure and air flow.

**6)** System for selecting and automatic feeding preoriented rivets or like fasteners to one or more riveting machines according to claims 1 wherein said first transporting means (20,22) from said floor mounted feed station (1) and said mobile magazine (2) comprises an interposed decelerating device (21) dedicated to slow down the rivet speed, said device presenting a cylindrical body (64) having a coaxial hole of the same diameter as the connected tube means, a plurality of little exhaust holes (66) radially displaced and an exhaust flow regulator means (65) for the partial occlusion of said exhaust holes (66), said decelerating device (21) allowing the rivet speed to be slowed down due to partial exhaust of the pneumatic force applied behind the rivets.

**7)** System for selecting and automatic feeding preoriented rivets or like fasteners to one or more riveting machines according to claims 1, 2 and 4 wherein said first positioning means (23) operate along two cartesian perpendicular axes in a plane perpendicular to the axes of the said magazine means (29), said positioning means (23) being able to bring in coaxial alignment the outlet end of each of said first transporting means (22) with the inlet upper end of any individual magazine means (29) wherein it is intended to store the rivet sent by the feed station (1).

**8)** System for selecting and automatic feeding preoriented rivets or like fasteners to one or more riveting machines according to claims 1, 2, and 4 wherein second positioning (30) means operate along two cartesian perpendicular axes in a plane perpendicular to the axes of the said magazine means, said positioning means being able to bring in coaxial alignment the inlet end of each of said second transporting means (33) under the outlet lower end of any of the magazine means (29) inside which are warehoused the rivets of the same kind and length requested by the riveting machine (3).

**9)** System for selecting and automatic feeding preoriented rivets or like fasteners to one or more riveting machines according to claim 1 wherein each of said transporting means (7,20) comprises an interposed shifting means (19) to allow the selection of the desired mobile buffer magazine (2,27,28) to which the rivets or like fasteners coming from the orienting means of the main feed station are addressed.

**10)** System for selecting and automatic feeding preoriented rivets or like fasteners to one or more riveting machines according to claim 2 wherein at least one individual magazine means (29) is thermally insulated and internally chilled by injection inside the tube of substances capable to subtract heat to the rivets.

**11)** System for selecting and automatic feeding preoriented rivets or like fasteners to one or more riveting machines according to claim 1 wherein the main feed station comprises:
- a plurality of orienting devices (11) each of which is set up for a specific kind of rivet (regardless its length) and each of which is capable to temporarily store a certain amount of rivets, orient them and release them one at a time.
- a plurality of magazine means (8) for a bunch of identical rivets each dedicated to a specific kind and grip length rivet or like fasteners comprising an externally operable closing-opening device (9) located at the lower end, said device allowing for gravity the entire contents to be discharged inside said orienting device means (11 ) once opened.
- at least one conveying means (10) interposed between said magazine means and the corresponding orienting means;
- a plurality of actuator means (75) for said closing and opening devices said (9);
- a supporting frame.

**12)** System for selecting and automatic feeding preoriented rivets or like fasteners to one or more riveting machines according to claim 10, wherein said magazine means (8) are hoppers located above said orienting means.

**13)** System for selecting and automatic fooding preoriented rivets or like fasteners to one or more riveting machines according to claim 11 wherein said connecting means (10) are tubes of a desired internal diameter whose upper end is connected to the opening-closing device (9) equipping each one of said magazine means (8) and whose lower end is located above the orienting means (11) dedicated to rivets of the same kind.

**14)** System for selecting and automatic feeding preoriented rivets or like fasteners to one or more riveting machines according to claims 11 wherein said connecting means (10) is a funnel (77) located above each one of said orienting means (11) and below said magazine means (8), said funnel (77) being capable to convey the rivets discharged from each one of said magazine means (8) inside the underlying orienting means (11).
